# DEMANDE DE BREVET EUROPEEN

(11) **EP 0 816 721 A1**
(43) Date de publication de la demande: **07.01.1998**
(21) Numéro de dépôt: 97450013.4
(22) Date de dépôt: 25.06.1997
(51) Int. Cl.: F16J 13/18, F16J 15/06

(54) **Trappe à fermeture hermétique**

(30) Priorité: 26.06.1996 FR 9608189
(71) Demandeur: BOYER, Société Anonyme, 33174 Gradignan Cedex (FR)
(72) Inventeur: Carme, Jacques, 33830 Belin-Beliet (FR)
(74) Mandataire: Hammond, William

(57) **Abrégé**

L'invention concerne une trappe à fermeture hermétique pour un conteneur, comportant une virole (1) solidarisée ou destinée à être solidarisée au conteneur dont un bord libre (2) définit une ouverture (3), et un obturateur (4) amovible muni de moyens d'actionnement et de verrouillage (5), qui est susceptible de venir s'appliquer et être maintenu contre le bord libre (2) de la virole (1), ainsi qu'un joint périphérique (8) monté sur le bord libre (2) de la virole (1).

## Description

L'invention concerne une trappe à fermeture hermétique. Elle s'applique notamment aux trappes d'accès pour des cuves ou des conteneurs par exemple alimentaires, et généralement à tous types de trappes de conteneur fermées par un obturateur, notamment un obturateur en tôle emboutie. Ces trappes sont généralement dénommées en fonction de leur taille trous de poing, de tête, d'homme ou de sauvetage.
Ces trappes étant généralement, mais non exclusivement, disposées au sommet du conteneur de façon à former une ouverture approximativement horizontale, on désignera dans l'ensemble de la description par haut, bas, intérieur, extérieur, les sens ou les positions correspondant à une telle disposition.
Selon l'art antérieur connu du demandeur, les trappes de ce type comportent une virole destiné à être solidarisé au conteneur, dont un bord libre périphérique définit une ouverture. La virole peut présenter une section transversale de forme ronde, ovale, rectangulaire, ou autre. L'obturateur est de contour correspondant à l'ouverture et comporte une bordure périphérique en forme de gorge dans laquelle est inséré un joint périphérique d'étanchéité. L'obturateur est appliqué et maintenu en position fermée sur la virole, de façon que le joint soit en contact avec le bord libre.
Un inconvénient de ces trappes de l'art antérieur réside dans le fait que sur la face extérieure du l'obturateur, notamment lorsque ce dernier est en tôle emboutie, la gorge forme une saillie périphérique qui retient les liquides et les poussières : au moment de l'ouverture de la trappe, ces liquides ou poussières risquent de pénétrer à l'intérieur du conteneur.
Un phénomène analogue se produit du côté intérieur de l'obturateur, où les liquides contenus dans le conteneur s'accumulent dans l'interstice périphérique entre le joint et le bord libre du cadre.
Un autre inconvénient est lié à la difficulté d'enlever et de remplacer le joint. En outre, si le joint est mal maintenu dans la gorge, le joint risque de tomber dans le conteneur au moment de l'ouverture de la trappe.

Un but de l'invention est de supprimer ces inconvénients. Un autre but de l'invention est de proposer une trappe à fermeture hermétique qui soit de construction simple, d'actionnement aisé et sûr, d'entretien facile, et qui assure une hygiène élevée.

A cet effet, la trappe à fermeture hermétique selon l'invention pour un conteneur, comportant une virole, ou cadre, solidarisée ou destinée à être solidarisée au conteneur, dont un bord périphérique libre ou bord supérieur définit une ouverture, et un obturateur amovible, muni de moyens d'actionnement et de verrouillage, qui est susceptible de venir s'appliquer et être maintenu contre le bord libre de la virole, est caractérisée par le fait que la virole comporte un joint périphérique monté sur le bord libre de l'ouverture, l'obturateur venant s'appliquer contre ce joint en position fermée.
De préférence, l'obturateur présente une forme générale bombée vers le haut, avec un méplat périphérique sur le pourtour en regard du joint suivi d'un retour dirigé vers le bas.
De préférence, le méplat est légèrement incliné vers le bas et vers l'extérieur.
Le joint présente avantageusement une forme annulaire, avec une lèvre périphérique supérieure orientée vers le haut et vers ie centre, une lèvre périphérique inférieure orientée vers le bas, et un retour périphérique de section transversale en forme de crochet disposé à l'extérieur et dirigé vers le bas en regard de la lèvre périphérique inférieure, de façon à enserrer le bord libre de la virole.
De préférence, le bord libre de la virole comporte un replat périphérique dirigé vers l'extérieur en regard du méplat de l'obturateur, le retour en forme de crochet du joint comprenant en outre de préférence une partie d'extrémité dirigée vers le centre, de façon à enserrer le replat périphérique, cette partie d'extrémité se prolongeant en outre le cas échéant vers le bas.
De préférence les lèvres périphériques supérieure et inférieure présentent une section effilée vers leur extrémité, de façon à réaliser une continuité de surface avec les faces intérieures respectivement de l'obturateur et de la virole.
De préférence, le joint est amovible.

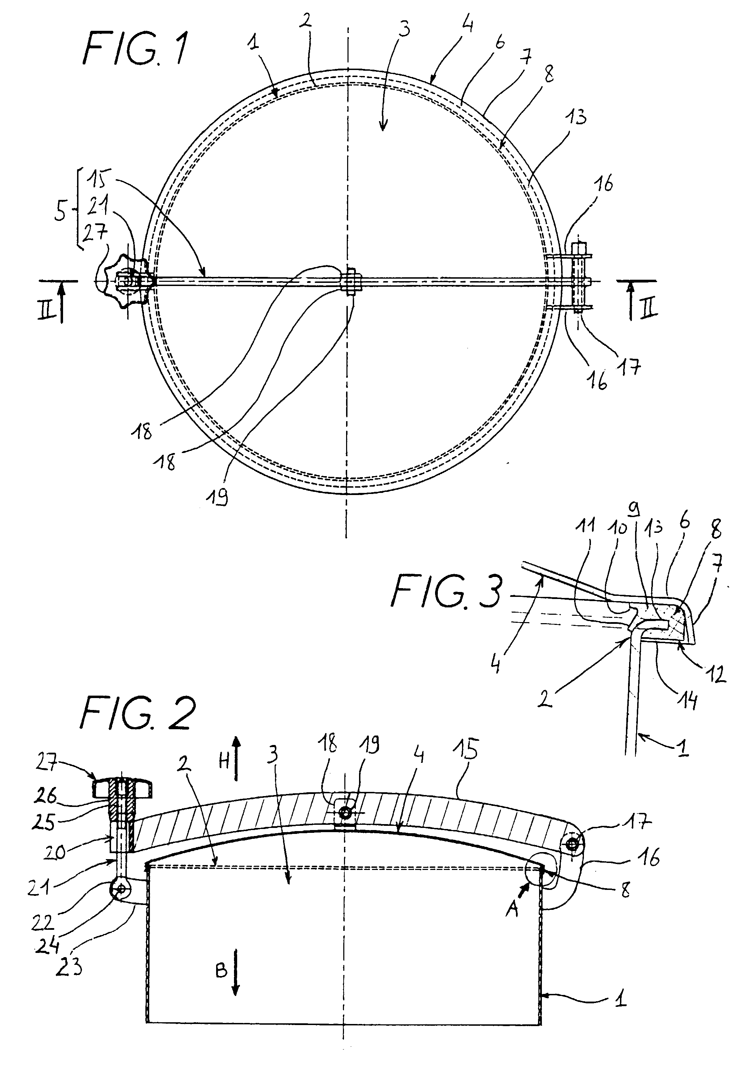

On comprendra mieux l'invention à la lecture de la description suivante d'un exemple de réalisation effectuée en référence aux dessins accompagnants parmi lesquels :
. la figure 1 est une vue en plan d'une trappe à fermeture hermétique selon l'invention ;
. la figure 2 est une vue en coupe selon la ligne ll-ll de la trappe de la figure 1;
. la figure 3 est une vue du détail A de la figure 2.

Les figures 1 à 3 représentent une trappe à fermeture hermétique selon l'invention, qui comprend une virole 1, ou cadre, de forme générale cylindrique à section transversale circulaire, dont une extrémité dite supérieure présente un bord périphérique libre 2 ou bord supérieur situé dans un même plan, qui définit ainsi une ouverture 3. Un obturateur 4 amovible est susceptible de venir s'appliquer et être maintenu contre le bord libre 2, de façon à fermer l'ouverture 3. L'obturateur est muni de moyens d'actionnement et de verrouillage désignés dans leur ensemble par la référence 5.
L'autre extrémité dite inférieure de la virole 1 est destinée à être solidarisée à un conteneur, au niveau d'un orifice de ce dernier. Par exemple, le bord inférieur de la virole est soudé sur le pourtour de l'orifice du conteneur (non représenté).
Dans l'ensemble de la description, on désignera par côté bas (flèche B) le côté de la trappe proche du conteneur, et par côté haut (flèche H) le côté opposé. Egalement, on désigne par côté intérieur l'espace situé à l'intérieur de la virole 1 et du conteneur, donc au-dessous de l'obturateur en position fermée, et par côté extérieur l'espace situé à l'extérieur de la virole 1 et du conteneur, ou au-dessus de l'obturateur en position fermée.
L'obturateur 4 présente une forme dépourvue de renfoncements ou de saillies. En particulier, l'obturateur 4 ne comporte aucun joint. Il présente une forme générale bombée vers le haut, avec un méplat 6 périphérique sur son pourtour en regard du bord libre 2 de la virole 1, suivi d'un retour 7 dirigé vers le bas. Le méplat 6 est légèrement incliné vers le bas et vers l'extérieur, de façon que l'ensemble de la face supérieure de l'obturateur 4 permette l'écoulement des liquides vers la périphérie.
Un joint d'étanchéité 8 de forme annulaire est monté sur le bord libre 2 de la virole 1. Ainsi, en position fermée, l'obturateur 4 est appliqué et maintenu contre ce joint 8, de façon à assurer une fermeture hermétique. Plus précisément, l'obturateur 4 est appliqué contre le joint 8 au niveau du méplat 7.
Le joint 8 présente une partie supérieure 9 légèrement inclinée vers le bas et vers l'extérieur, selon une pente correspondant à celle du méplat 6 de l'obturateur 4, de façon être en contact sur une surface la plus étendue possible avec la face inférieure de l'obturateur 4.
Le joint 8 comporte également une lèvre supérieure 10 orientée vers le haut et vers l'intérieur et une lèvre inférieure 11 orientée vers le bas. La lèvre supérieure 10 est destinée à assurer une liaison entre le joint 8 et la face intérieure de l'obturateur 4. De préférence, la lèvre 10 est effilée vers son extrémité de façon à assurer une continuité de surface avec la partie bombée de la face intérieure de l'obturateur 4. A cet effet, l'angle au sommet de la lèvre 10 correspond à l'angle complémentaire de la rupture angulaire entre la partie bombée et le méplat 6 de l'obturateur 4. De la même façon, la lèvre inférieure 11 est destinée à assurer une liaison entre le joint 8 et la face intérieure de la virole 1. Elle est de préférence effilée vers son extrémité.
Ainsi, les liquides peuvent-ils s'écouler sans obstacle de la face inférieure de l'obturateur 4 sur le joint 8 puis sur la face intérieure de la virole 1.
Le joint comporte également un retour périphérique 12 disposé à l'extérieur en forme de crochet dirigé vers le bas, de façon à permettre son montage en force sur le bord libre 2 de la virole 1. Plus précisément, le bord libre 2 de la virole comporte un replat 13 dirigé vers l'extérieur en regard du méplat 6 de l'obturateur 4, et le retour en forme de crochet 12 est suivi d'une partie d'extrémité 14 dirigée vers l'intérieur, de façon que le retour 12 en forme de crochet du joint 8 enserre le bord libre 2 de la virole 1 et le replat 13. Ce retour en forme de crochet 12 du joint pourrait le cas échéant, selon une variante non représentée, se prolonger vers le bas en regard de la lèvre inférieure 11, de façon à mieux enserrer le bord libre 2 de la virole 1.
On notera que le replat 13 remplit également une fonction de rigidification du bord libre 2 de la virole 1 lorsque l'obturateur 4 est appliqué en position fermée.
Les moyens d'actionnement et de verrouillage 5 de l'obturateur 4 sont constitués par un bras 15 qui est articulé par une extrémité sur une patte double 16 solidaire de la virole 1 par l'intermédiaire d'un axe 17, et sur lequel une patte double 18 solidaire de la face supérieure de l'obturateur 4 est articulée par l'intermédiaire d'un axe 19.
Ainsi, le bras 15 est mobile entre une position soulevée, non représentée, écartant l'obturateur 4 du bord libre 2 de la virole 1 et dégageant l'ouverture 3, et une position fermée, représentée sur les figures 1 à 3, appliquant l'obturateur 4 contre le bord libre 2.
En outre, le bras 15 se prolonge en une traverse au-delà de l'articulation de la patte double 18 de l'obturateur 4 jusqu'au côté diagonalement opposé de la virole 1, où il comporte à son extrémité une gorge verticale ouverte 20.
Une tige 21 est articulée par une de ses extrémités 22 sur une patte double 23 solidaire de la virole 1 par l'intermédiaire d'un axe 24, dans une position diagonalement opposée à la patte double 16 par rapport à l'ouverture 3. Son autre extrémité filetée 25 coopère avec une douille filetée 26 d'une molette 27. La tige 21 est susceptible de venir s'insérer par sa partie médiane dans la gorge 20 du bras 15.
Ainsi, pour verrouiller l'obturateur 4 en position fermée, on bascule tout d'abord le bras 15 vers le bas de façon à déposer l'obturateur 4 sur le bord libre 2 de la virole 1, puis on pivote la tige 21 de façon à l'insérer par sa partie médiane dans la gorge 20 du bras 15, et on tourne la molette 27 pour serrer l'extrémité du bras 15 vers le bas et vers la virole 1, de telle sorte que l'obturateur 4 est appliqué et maintenu contre le joint 8 du bord libre 2 de la virole 1.
Pour déverrouiller la trappe, on procède simplement aux opérations inverses.

## Revendications

1. Trappe à fermeture hermétique pour un conteneur, comportant une virole solidarisée ou destinée à être solidarisée au conteneur, dont un bord périphérique libre ou bord supérieur définit une ouverture, et un obturateur amovible (4), ledit obturateur présentant une forme générale bombée vers le haut, avec un méplat (6) périphérique sur le pourtour en regard du joint suivi d'un retour (7) dirigé vers le bas, ledit méplat (6) étant légèrement incliné vers le bas et vers l'extérieur, l'obturateur (4) étant muni de moyens d'actionnement et de verrouillage, et étant susceptible de venir s'appliquer et être maintenu contre le bord libre de la virole, ladite trappe comportant en outre un joint périphérique (8) monté sur le bord libre (2) de l'ouverture (3), l'obturateur (4) venant s'appliquer contre ce joint (8) en position fermée, caractérisée par le fait que le joint (8) présente une forme annulaire, avec une lèvre périphérique supérieure (10) orientée vers le haut et vers le centre, une lèvre périphérique inférieure (11) orientée vers le bas, et un retour périphérique (12) de section transversale en forme de crochet disposé à l'extérieur et dirigé vers le bas en regard de la lèvre périphérique inférieure (11), de façon à enserrer le bord libre (2) de la virole (1).

2. Trappe selon la revendication 1, caractérisée par le fait que le bord libre (2) de la virole (1) comporte un replat périphérique (13) dirigé vers l'extérieur, le retour (12) en forme de crochet du joint comprenant une partie d'extrémité (14) dirigée vers le centre, de façon à enserrer le replat périphérique (13), cette partie d'extrémité (14) se prolongeant en outre le cas échéant vers le bas.

3. Trappe selon l'une quelconque des revendications 1 ou 2, caractérisée par le fait que les lèvres périphériques supérieure (10) et/ou inférieure (11) présentent une section effilée vers leur extrémité de façon à réaliser une continuité de surface avec les faces intérieures respectivement de l'obturateur (4) et de la virole (1).

4. Trappe selon l'une quelconque des revendications 1 à 3, caractérisée par le fait que le joint (8) est amovible.
